# EUROPÄISCHE PATENTSCHRIFT

(11) **EP 1 409 829 B1**
(45) Veröffentlichungstag und Bekanntmachung des Hinweises auf die Patenterteilung: **02.07.2008**
(21) Anmeldenummer: 00956210.9
(22) Anmeldetag: 19.07.2000
(51) Int. Cl.: E06B 5/16, E06B 3/66, E06B 3/20

(54) **BRANDSCHUTZTÜR ODER -FENSTER**
FIRE DOOR OR WINDOW
PORTE OU FENETRE COUPE-FEU

(30) Priorität: 21.07.1999 DE 19933408
(43) Veröffentlichungstag der Anmeldung: 21.04.2004
(73) Patentinhaber: Peneder Immobilien GmbH, 4904 Atzbach (AT)
(72) Erfinder: DEGELSEGGER, Walter, A-4693 Desselbrunn (AT)
(74) Vertreter: Beetz, Rainer
(86) Internationale Anmeldenummer: PCT/EP2000/006893
(87) Internationale Veröffentlichungsnummer: WO 2001/007746

(56) Entgegenhaltungen:
- EP-A- 0 278 711
- EP-A- 1 020 605
- WO-A-99/20867
- DE-A- 19 543 148
- FR-A- 2 651 270
- GB-A- 2 309 728

## Beschreibung

Die Erfindung betrifft eine Brandschutztür oder ein Brandschutzfenster gemäss dem Oberbegriff des Patentanspruches 1, die zur Vermeidung des Übergreifens von Rauch und Feuer in Brandabschnitten eingesetzt werden.

Eine derartige Brandschutztür bzw. ein derartiges Brandschutzfenster ist beispielsweise aus der FR 2 651 270 bekannt, wobei hier jedoch ein Rahmenelement vorgesehen ist, welches aus einer mineralischen Harzmatrix einer sog. "Geopolymer"-Art besteht, welche gegebenenfalls mit einem organischen duroplastischen Harz verbunden ist. Um das mechanischen Verhalten des Rahmenelements zu verbessern, kann zudem eine Verstärkung vorgesehen werden, die aus widerstandsfähigen Glas-, Kohlenstoff-, Aramid- oder ähnlichen Fasern besteht. Hierbei können die Fasern in Form von kurzen oder langen Fasern oder auch als Gewebe in dem Rahmenelement eingearbeitet werden. Eine Herstellung eines derartigen Rahmens ist jedoch aufwendig und kostenintensiv.

Zudem ist aus der DE 195 43 148 A1 eine Brandschutzverglasung bekannt, bei welcher Abstandhalteprofile vorgesehen sind, die allgemein aus einem Verbundwerkstoff, insbesondere Glasfaserverstärktem Polyester-Kunststoff bestehen.

Weiters ist der EP 0 401 555 A2 eine Brandschutztür zu entnehmen, wo innerhalb eines Metallrahmens, der eine umlaufende Aufnahmenut hat, eine Glasscheibe eingesetzt ist. Dabei endet die Glasscheibe vor dem Rahmen und wird durch zusätzliche auf der Glasscheibe befestigte Metallrandstreifen, die als Ausgleichsadapter fungieren, mit dem Metallrahmen verbunden. Die Metallstreifen werden dabei mit einem üblichen Brandschutzkleber, beispielsweise auf Wasserglasbasis, verbunden.

Eine Abschlussleiste für Metalltüren zeigt die EP 0 612 910 A2, die zur Stabilitätserhöhung im unteren Bereich zwischen zwei vorstehenden Schenkeln eingedrückt wird.

Ein Rahmenprofil für Brandschutztüren ist der EP 0 444 393 A2 zu entnehmen, bei dem eine Glasscheibe von einem starken Rahmenprofil gehalten wird. Das Rahmenprofil ist als Hohlkammerprofil ausgeführt und weist in den Kammern eingeführte Brandschutzten aus, die die FeuerbeständiglceiL einer solchen Tür garantieren.

Eine feuerwiderstandsfähige Verglasung wird in der DE 296 45 259 A1 beschrieben. Dabei werden Silikat-Glasscheiben aus vorgespanntem Glas auf der einen Seite verwendet und auf der anderen Seite eines dazwischenliegenden Luftzwischenraumes eine armierte Silikat-Glasscheibe verwendet. Der Aufbau einer solchen feuerbeständigen Verglasung wird durch einen den Rand einfassenden und diesen übergreifenden metallischen Rahmen bewerkstelligt.

Die DE 297 42 665 A1 zeigt eine feuerhemmende Schwing- oder Pendeltür, bei der der Türstock bzw. die Ränder der Flügel ein wärmeisolierendes Material aufweisen, das sich über die gesamte Länge bzw. Breite erstreckt. Dieses wärmeisolierende Material wird durch Wärmeeinwirkung aufgequellt, so daß das Element der Tür im Brandfalle einen sicheren Abschluß gegen Feuer mit sich bringt. Diese Tür besteht aus einem flächigen Material, welches nicht durchsichtig ist und wird in einem Teilbereich durch ein einzusetzendes Fenster unterbrochen.

Die Aufgabe der Erfindung liegt darin, eine Brandschutztür oder ein -fenster zu schaffen, bei denen auf die Verwendung üblicher im Brandschutz verwendeter Materialien, wie Leichtmetall, Holz oder Stahl verzichtet wird, um derartige Bauelemente kostengünstig herstellen zu können.

Gelöst wird die Aufgabe durch das Kennzeichen des Patentanspruches 1. wobei die Unteransprüche eine weitere Ausgestaltung des erfindungsgemäßen Gedankens wiedergeben.

Es wird vorgeschlagen, den beweglichen, als auch den ortsfesten Rahmen einer Brandschutztür oder eines Brandschutzfensters aus Profilen aus einem feuerwiderstandsfähigen Kunststoff herzustellen. Brandschutztüren und Fenster werden in Brandschutzwänden eingebaut und haben die Aufgabe, eine Ausbreitung von Feuer und auch Rauch im Gefahrenfall zu unterbinden. Aus diesem Grunde sind entsprechende Brandschutztüren und Brandschutzfenster in entsprechenden Feuerwiderstandsklassen klassifiziert. Diese einzelnen Feuerwiderstandsklassen sind dabei nach Zeiten der Feuerwiderstandsfähigkeit der entsprechenden Bauteile aufgeteilt.

Die Profile, sei es als Voll- oder Hohlprofile aus Kunststoff mit unterschiedlichen Kammern, werden vorzugsweise als Rahmen zusammengesetzt, um als Brandschutztür oder als Brandschutzfenster eingesetzt zu werden. Als Ausfachung innerhalb des Rahmens kann entweder eine allgemein als Brandschutzglas verwendete mehrlagige Glasscheibe mit entsprechend angeordneten Brandschutzschichten, die durch die Hitzeeinwirkung eine Absorption der Wärmestrahlungen zur Folge haben oder aber auch ein feuerwiderstandsfähiger Kunststoff in Flächenmaterial verwendet werden.

Erfindungsgemäß ist es auch denkbar, Rahmen und Ausfachung aus einem Stück in Formen herzustellen. Auch kann bei einer niedrigen Brandschutzklasse eine Brandschutztür oder ein Brandschutzfenster daraus bestehen, daß der aus Kunststoff gefertigte Rahmen zwischen zwei Glasscheiben eingebettet wird. Dabei können die beabstandeten Glasscheiben bis an den äußeren Rand des beweglichen Rahmens heranreichen. Wird eine höhere Brandklasse gewählt, so kann zwischen den beabstandeten Glasscheiben ein transparentes Brandschutzmaterial eingefügt werden. Dieses Brandschutzmaterial kann ein Brandschutzglas der vorgenannten Art oder aber auch ein flüssiges Brandschutzgel sein.

Der feuerwiderstandsfähige Kunststoff besteht aus einem Trägermaterial in Form von endlosen Glasfaserrovings, die in axialer Richtung des Profils angeordnet sind. Darüber hinaus wird dieses "Rohprofil" in radialer Richtung noch mit einem weiteren Glasfaserkomplex gestärkt. Dabei werden diese Glasfasern mit einer Harzmatrix imprägniert und in einer der Profilgestalt angepaßten Ziehform gehärtet. Dabei ist diese Ziehform temperaturbeaufschlagt, so daß ein schneller Fertigungsprozeß gewährleistet ist.

Die verwendete Harzmatrix besteht dabei im wesentlichen aus ungesättigten Polyesterharzen mit entsprechenden Härtern, Beschleunigern, Additiven und, was ganz wichtig ist, mit brandhemmenden Füllstoffen. Zur Anpassung an die Optik bestehender Gebäude wird eine entsprechende Farbbeimengung in Form von Farbpasten durchgeführt. Derartige Brandschutztüren können sowohl als Schiebetür als auch als ein- oder zweiflügelige Türen mit und ohne Anschlag ausgeführt werden. Da die Herstellung derartiger Profile in der Formgestaltung fast keine Grenzen setzt, ist es auch möglich, entsprechende Profile miteinander zu kombinieren.

Ein solcher beweglicher Rahmen kann auch bei entsprechender Formgestaltung als ortsfester Rahmen durch feuerwiderstandsfähige Kunststoffe hergestellt werden. Bei einer Verwendung von Hohlprofilen können diese auch mit einem Brandschutzmaterial ganz oder teilweise ausgefüllt werden.

## Patentansprüche

1. Brandschutztür oder -fenster zur Vermeidung des Übergreifens von Rauch und Feuer, die/das im Bereich eines Brandschutzabschnittes verwendbar ist, wobei die Brandschutztür oder das Brandschutzfenster aus einem beweglichen Rahmen mit einer diesen ausfüllenden Ausfachung aus einem feuerwiderstandsfähigen Material besteht und wobei der bewegliche Rahmen von einem ortsfesten Rahmenteil teilweise oder ganz umschlossen ist, wobei der bewegliche Rahmen und der ortsfeste Rahmen aus feuerwiderstandsfähigen Kunststoffprofilen bestehen, **dadurch gekennzeichnet, dass** die Kunststoffprofile ein Rohprofil mit einem Trägermaterial in Form von endlosen Glasfaserrovings aufweisen, die in axialer Richtung des Kunststoffprofils angeordnet sind, wobei diese Rohprofile noch mit einem weiteren Glasfaserkomplex verstärkt sind, dessen Fasern in radialer Richtung des Kunststoffprofils angeordnet sind, und wobei die Glasfasern des weiteren Glasfaserkomplexes mit einer Harzmatrix imprägniert und in einer temperaturbeaufschlagten Form gehärtet werden.

2. Brandschutztür oder -fenster nach Anspruch 1, **dadurch gekennzeichnet, dass** die Ausfachung des beweglichen Rahmens ganz oder teilweise aus einem feuerwiderstandsfähigen Kunststoff besteht.

3. Brandschutztür oder -fenster nach Anspruch 1, **dadurch gekennzeichnet, dass** die Ausfachung und der bewegliche Rahmen aus einem Stück bestehen.

4. Brandschutztür oder -fenster nach Anspruch 1, **dadurch gekennzeichnet, dass** die Ausfachung des beweglichen Rahmens ganz oder teilweise aus einem Brandschutzglas besteht.

5. Brandschutztür oder -fenster nach Anspruch 1, **dadurch gekennzeichnet, dass** der bewegliche Rahmen zwischen zwei beabstandeten Glasscheiben eingebettet ist.

6. Brandschutztür oder -fenster nach Anspruch 5, **dadurch gekennzeichnet, dass** die Glasscheiben sich bis an den äußeren Rand des Rahmens erstrecken.

7. Brandschutztür oder -Fenster nach Anspruch 5, **dadurch gekennzeichnet, dass** zwischen den beabstandeten Glasscheiben ein transparentes Brandschutzmaterial vorhanden ist.

8. Brandschutztür oder -fenster nach einem oder mehreren der vorhergehenden Ansprüche, **dadurch gekennzeichnet, dass** der bewegliche und der ortsfeste Rahmen aus Vollmaterial bestehen.

9. Brandschutztür oder -fenster nach einem oder mehreren der Ansprüche 1-7, **dadurch gekennzeichnet, dass** der bewegliche und der ortsfeste Rahmen aus Hohlprofilen bestehen.

10. Brandschutztür oder -fenster nach Anspruch 9, **dadurch gekennzeichnet, dass** die Hohlprofile mit einem Brandschutzmaterial ganz oder teilweise ausgefüllt sind.

11. Brandschutztür oder -fenster nach Anspruch 7, **dadurch gekennzeichnet, dass** das Brandschutzmaterial zwischen den beabstandeten Glasscheiben ein Brandschutzglas ist.

12. Brandschutztür oder -fenster nach Anspruch 7, **dadurch gekennzeichnet, dass** das Brandschutzmaterial zwischen denr beabstandeten Glasscheiben ein Brandschutzgel ist.

13. Brandschutztür oder -fenster nach einem der vorhergehenden Ansprüche, **dadurch gekennzeichnet, dass** die Harzmatrix im Wesentlichen aus einem ungesättigten Polyesterharz, Härter, Beschleuniger, Additiven, Farbpasten und brandhemmenden Füllstoffen besteht.

## Claims

1. A fire door or fire window for preventing the spreading of smoke and fire and usable in the region of a fire protection sector, wherein the fire door or the fire window consists of a movable frame with an infill made of fire-resistant material filling said frame, and wherein the movable frame is partially or completely enclosed by a stationary frame part, the movable frame and the stationary frame being made of fire-resistant synthetic material sections, **characterised in that** the synthetic material sections comprise a blank section with a carrier material in the form of continuous fibreglass rovings arranged in axial direction of the synthetic material section, these blank sections being reinforced by yet a further fibreglass complex, the fibres of which are arranged in radial direction of the synthetic material section, the glass fibres of said further glass fibre complex being soaked in a resin matrix and cured in a mould to which temperature is applied.

2. The fire door or fire window according to claim 1, **characterised in that** the infill of the movable frame is completely or partially made of a fire-resistant synthetic material.

3. The fire door or fire window according to claim 1, **characterised in that** the infill and the movable frame are integrally formed in one piece.

4. The fire door or fire window according to claim 1, **characterised in that** the infill of the movable frame is completely or partially made of a fire-protection glass.

5. The fire door or fire window according to claim 1, **characterised in that** the movable frame is embedded between two spaced-apart glass panes.

6. The fire door or fire window according to claim 5, **characterised in that** the glass panes extend as far as to the external rim of the frame.

7. The fire door or fire window according to claim 5, **characterised in that** a transparent fire-protection material is provided between the spaced-apart glass panes.

8. The fire door or fire window according to any one or several of the preceding claims, **characterised in that** the movable and the stationary frames are made of solid material.

9. The fire door or fire window according to any one or several of claims 1 to 7, **characterised in that** the movable and the stationary frames consist of hollow sections.

10. The fire door or fire window according to claim 9, **characterised in that** the hollow sections are completely or partially filled with a fire-protection material.

11. The fire door or fire window according to claim 7, **characterised in that** the fire-protection material between the spaced-apart glass panes is a fire-protection glass.

12. The fire door or fire window according to claim 7, **characterised in that** the fire-protection material between the spaced-apart glass panes is a fire-protection gel.

13. The fire door or fire window according to any one of the preceding claims, **characterised in that** the resin matrix substantially consists of an unsaturated polyester resin, a curing agent, an accelerator, additives, colour pastes and fire-retarding fillers.

## Revendications

1. Porte ou fenêtre coupe-feu, pour éviter l'envahissement par la fumée et le feu, susceptible d'être utilisée dans la zone d'un tronçon de protection contre l'incendie, la porte coupe-feu ou la fenêtre coupe-feu étant composée d'un cadre mobile avec un remplissage comblant celui-ci, formé d'un matériau apte à résister au feu, et le cadre mobile étant entouré, partiellement ou complètement, par une partie de cadre fixe, le cadre mobile et le cadre fixe étant composés de profilés en matière synthétique apte à résister au feu, **caractérisée en ce que** les profilés en matière synthétique présentent un profilé tubulaire, avec un matériau support se présentant sous la forme de rowings en fibres de verre, sans fin, disposés en direction axiale du profilé en matière synthétique, ces profilés tubulaires étant encore renforcés avec un autre complexe à fibres de verre, dont les fibres sont disposées dans la direction radiale du profilé en matière synthétique, et les fibres de verre de l'autre complexe à fibres de verre étant imprégnées d'une matrice en résine et durcies, dans un moule sollicité par exposition à une certaine température.

2. Porte ou fenêtre coupe-feu selon la revendication 1, **caractérisée en ce que** le remplissage du cadre mobile est composé, entièrement ou partiellement, d'une matière synthétique apte à résister au feu.

3. Porte ou fenêtre coupe-feu selon la revendication 1, **caractérisée en ce que** le remplissage et le cadre mobile sont composés d'une seule pièce.

4. Porte ou fenêtre coupe-feu selon la revendication 1, **caractérisée en ce que** le remplissage du cadre mobile est composé, complètement ou partiellement, d'un verre de protection contre l'incendie.

5. Porte ou fenêtre coupe-feu selon la revendication 1, **caractérisée en ce que** le cadre mobile est intégré entre deux panneaux de verre espacés.

6. Porte ou fenêtre coupe-feu selon la revendication 5, **caractérisée en ce que** les panneaux de verre s'étendent jusqu'au bord extérieur du cadre.

7. Porte ou fenêtre coupe-feu selon la revendication 5, **caractérisée en ce qu'**un matériau coupe-feu transparent est disposé entre les panneaux de verre espacés.

8. Porte ou fenêtre coupe-feu selon l'une ou plusieurs des revendications précédentes, **caractérisée en ce que** le cadre mobile et le cadre fixe sont composés de matériau massif.

9. Porte ou fenêtre coupe-feu selon l'une ou plusieurs des revendications 1 à 7, **caractérisée en ce que** le cadre mobile et le cadre fixe sont composés de profilés creux.

10. Porte ou fenêtre coupe-feu selon la revendication 9, **caractérisée en ce que** les profilés creux sont remplis, totalement ou partiellement, d'un matériau coupe-feu.

11. Porte ou fenêtre coupe-feu selon la revendication 7, **caractérisée en ce que** le matériau coupe-feu, disposé entre les panneaux en verre espacés, est un verre coupe-feu.

12. Porte ou fenêtre coupe-feu selon la revendication 7, **caractérisée en ce que** le matériau coupe-feu, disposé entre les panneaux en verre espacés, est un gel coupe-feu.

13. Porte ou fenêtre coupe-feu selon l'une des revendications précédentes, **caractérisée en ce que** la matrice en résine est composée essentiellement d'une résine de polyester insaturée, d'un durcissant, d'un accélérateur, d'additifs, de pâtes colorées, et de charges entravant la propagation de l'incendie.
